# EUROPEAN PATENT APPLICATION

(11) **EP 2 180 295 A1**
(43) Date of publication of application: **28.04.2010**
(21) Application number: 09173702.3
(22) Date of filing: 21.10.2009
(51) Int. Cl.: G01D 5/14

(54) **Incremental position, speed and direction detection apparatus and method for rotating targets utilizing magnetoresistive sensor**

(30) Priority: 22.10.2008 US 256110
(71) Applicant: Honeywell International Inc., Morristown, NJ 07962-2245 (US)
(72) Inventor: Bussan, Anthony J., Davis Junction, IL 61020 (US)
(74) Representative: Buckley, Guy Julian

(57) **Abstract**

A magnetic sensor apparatus (50) for sensing a magnet (52) is mounted to a rotating target (51), wherein the magnet spins with the rotating targe. The apparatus includes a substrate (56), a first (54) and a second (55) magnetoresistive sensor placed in a bridge configuration on the substrate to detect magnetic flux in a magnetic field created by said magnet, and to output analog bridge signals having an angular frequency. An interpolating integrated circuit (57) analyzes the analog bridge signals and converts the analog bridge signals into digital data. A processor (58) determines speed, position and direction of the rotating target from the digital data.

## Description

### TECHNICAL FIELD

Embodiments are generally related to sensing devices and components thereof. Embodiments are also related to magnetic sensor devices. Embodiments are particularly related to Anisotropic Magnetoresistive ("AMR") devices. Embodiments are additionally related to interpolating integrated circuits.

### BACKGROUND OF THE INVENTION

Magnetic sensors are widely used to detect the speed and direction of movement of a gear or slotted target. Magnetic sensors can be placed within a magnetic field created between a magnet and a gear or slot-patterned target. As the gear rotates, the tooth/slot pattern of the target changes the magnetic field pattern created by the magnet. The magnetic sensor can detect whether the magnet is facing a slot or a tooth by the difference in the magnetic field strength. This difference in magnetic field strength can be detected despite not being in contact with the target.

The magnetic field strength detected by the magnetic sensor is dependent on the space between the magnetic sensor, the magnet, and the gear or slot-patterned target. Magnetic sensors are also referred to as proximity sensors and geartooth sensors. There are generally two types of magnetic sensors: Hall sensors and magnetoresistive sensors. Hall sensors can be employed in some sensing applications to detect the magnetic field strength component in a direction perpendicular to the sensing plane of the sensor. Magnetoresistive sensors, on the other hand, are capable of detecting magnetic field strength or angle in a direction within the sensing plane of the magnetoresistive element and perpendicular to its thinnest dimension. Magnetoresistive sensors also offer higher sensitivities and superior performance to that of the Hall sensors. Magnetoresistive sensors come in different types. These are ordinary magnetoresistors (MR), anisotropic magnetoresistors (AMR), giant magnetoresistors (GMR), colossal magnetoresistors (CMR), and so forth.

Several methods using magnetic sensors have been implemented to determine the speed and direction of movement of a gear or other slotted target. In some configurations, two magnetic sensors (e.g., Hall, magnetoresistive, or variable reluctance), for example, can be spaced a fixed distance in order to produce two signals with shifted phase. In such a scenario, the phase shift can be used to calculate the direction of movement of the target. This phase shift is highly dependent on the spacing of the two sensor elements relative to the size and spacing of the target features.

A distinct and different spacing of sensor elements is therefore needed for every different target feature size and spacing in order to produce optimum phase shift between signals. The sensor elements must be accurately placed during manufacturing of the sensor package, or are dynamically tuned and adjusted to maintain the phase shift. The resulting sensor system package must also maintain this spacing throughout the operating environment and life of the system. Attempts to use a given sensor system with targets of different feature size and spacing typically lead to errors.

In addition to producing accurate readings of gears, there is a need to produce sensors that produce accurate readings of rotating objects regardless of whether it has teeth and slots, or regardless of whether the target is ferrous.

Presently, there are ways to determine the position, speed, and direction of non-ferrous rotating targets. One such method involves the use of optical sensors. However, the drawback of optical sensors is that they are not as functional in a contaminated environment. Therefore, there is a need to produce a sensor that will work regardless of alignment, temperature, and contamination, without regard to the ferrous composition of the target or whether there are teeth and slots.

It is therefore believed that a solution to these problems involves the design and implementation of an improved apparatus and method for determining position, speed and direction of rotating targets, as disclosed in greater detail herein.

### BRIEF SUMMARY

The following summary is provided to facilitate an understanding of some of the innovative features unique to the embodiments disclosed and is not intended to be a full description. A full appreciation of the various aspects of the embodiments can be gained by taking the entire specification, claims, drawings, and abstract as a whole.

It is, therefore, one aspect of the present invention to provide for an improved sensing device.

It is another aspect of the present invention to provide for an improved magnetic sensor.

It is yet another aspect of the present invention to provide for an improved anisotropic magnetoresistive (AMR) sensor to determine the position, speed and direction of a rotating target.

It is yet another aspect of the present invention to provide for a sensor that works equally well for ferrous as well as non-ferrous rotating targets.

The aforementioned aspects and other objectives and advantages can now be achieved as described herein. A magnetic sensing apparatus and method are disclosed, which includes a rotating target. A magnet is mounted on the rotating target such that the magnet is affixed on the same axis of rotation as that of the target. A bridge configuration magnetoresistive sensor is positioned on the same axis of rotation of the magnet-mounted rotating target.

The magnetoresistive sensor detects the fluctuation in the magnetic field as the rotating target spins. These analog bridge signals are routed to an interpolation integrated circuit. The integrated circuit divides the signals into small angular increments and converts them into digital form. The final output has an angular frequency that is many times that of the angular frequency of the bridge outputs. These signals can be used to determine the angular speed, position, and direction of the rotating target. The apparatus and method can be used for the target as it is spinning clockwise or reverse in a counter-clockwise direction.

In another embodiment, the anisotropic magnetoresistive sensors can be situated in an interlaced bridge configuration to produce dual phased signals. Two or more magnetoresistive sensors can be placed intertwined on the substrate where the first magnetoresistive sensor is offset from the second magnetoresistive sensor in angle and or position. The magnetoresistive sensors produce an output signal representing magnetic flux flowing through the magnetoresistive sensors such that the magnetoresistive sensors are reactive to the angle of magnetic flux of the target.

In another embodiment, a circuit can be formed to comprise the substrate with the interlaced bridge configuration anisotropic magnetoresistive sensors as well as the interpolating integrated circuit.

### BRIEF DESCRIPTION OF THE DRAWINGS

The accompanying figures, in which like reference numerals refer to identical or functionally-similar elements throughout the separate views and which are incorporated in and form a part of the specification, further illustrate the embodiments and, together with the detailed description, serve to explain the embodiments disclosed herein.

FIG. 1A illustrates a perspective view of a rotating target speed, position and direction sensor, which can be adapted for use in accordance with a preferred embodiment;

FIG. 1 B illustrates a side view of a rotating target speed, position and direction sensor as illustrated in FIG. 1A;

FIG. 2A illustrates a perspective view of a traditional magnet relative to the sensor;

FIG. 2B illustrates a perspective view of an inverse magnet relative to the sensor;

FIG. 3A illustrates a perspective view of an integrated circuit with bridge configuration of magnetoresistive sensors that are intertwined with the first magnetoresistive sensor offset from the second magnetoresistive sensor, which can be adapted for use in accordance with a preferred embodiment;

FIG. 3B illustrates an additional perspective view of an integrated circuit with bridge configuration of magnetoresistive sensors that are intertwined with the first magnetoresistive sensor offset from the second magnetoresistive sensor, which can be adapted for use in accordance with a preferred embodiment;

FIG. 4 illustrates graphs depicting changes in magnetic flux as detected by two anisotropic magnetoresistors (AMRs) from a rotating target speed, position and direction sensor as illustrated in FIG. 1A and B;

FIG. 5 illustrates a block diagram of an apparatus for detecting speed, position and direction of rotating targets, in accordance with a preferred embodiment; and

FIG. 6 illustrates a high-level diagram of a method for detecting speed position and direction of rotating targets, which can be adapted for use in accordance with a preferred embodiment.

### DETAILED DESCRIPTION

The particular values and configurations discussed in these non-limiting examples can be varied and are cited merely to illustrate at least one embodiment and are not intended to limit the scope thereof.

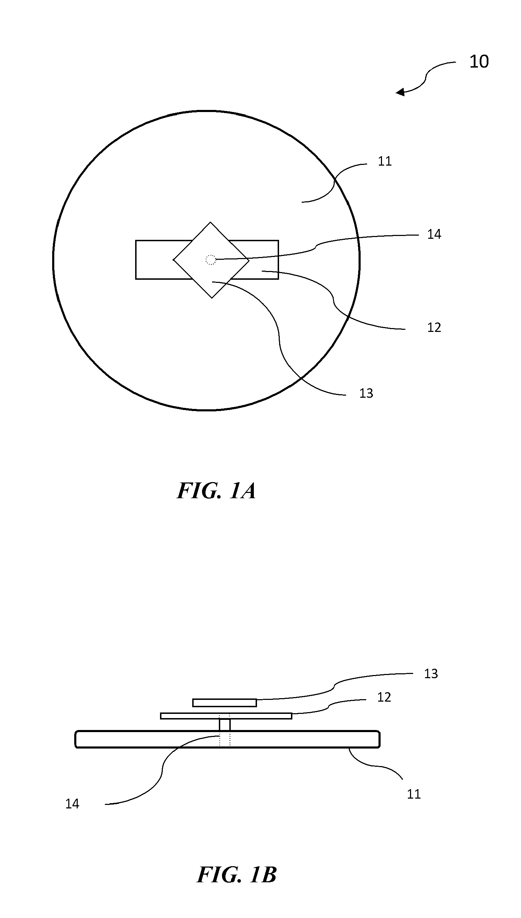

FIG. 1A and FIG. 1 B illustrate perspective views 10 of a rotating target speed, position and direction sensing apparatus 13, which can be adapted for use in accordance with a preferred embodiment. A magnet 12 is mounted on the rotating target 11 and spins with the rotating target 11 on the same axis. This is accomplished as they share the same axle 14. Because the magnet 12 is mounted on the rotating target 11, the composition of the rotating target 11 is not a factor. Therefore, there is no need for the target to be made of a ferrous material as is the case with other inventions utilizing magnetoresistive sensors. The sensing apparatus 13 is positioned proximate the rotating target 11.

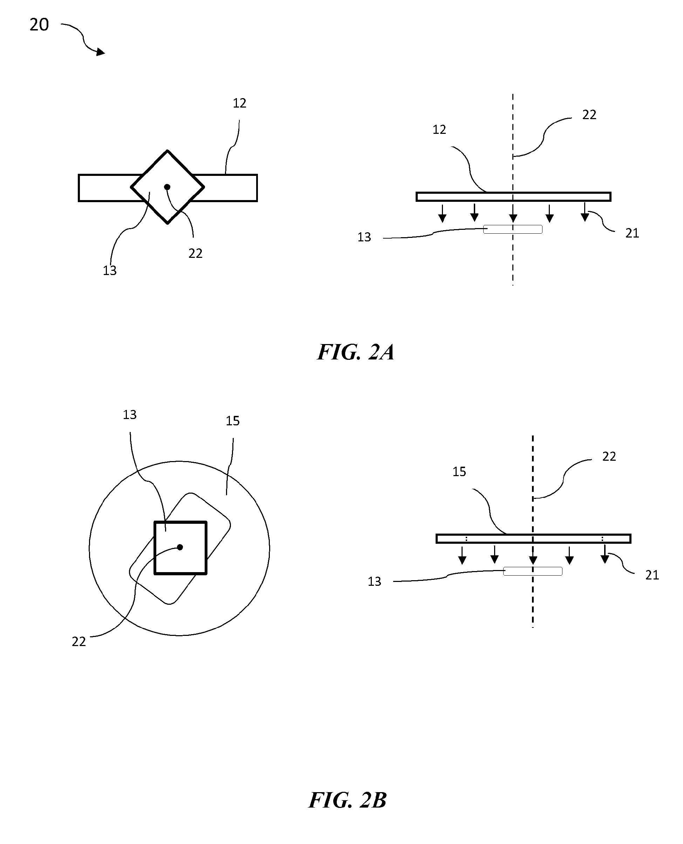

FIG. 2A and 2B illustrates a perspective view 20 of a traditional magnet 12 and an inverse magnet 15 relative to the sensor. The flexibility of the present invention is enhanced because various shapes of magnets can be used as long as the magnet is mounted on the rotating target 11 on the same axis of rotation 22. A magnet 12 or 15 generates a magnetic field 21. The magnetic sensing apparatus 13 senses the changes in the magnetic field and produces output signals representative of the magnetic flux.

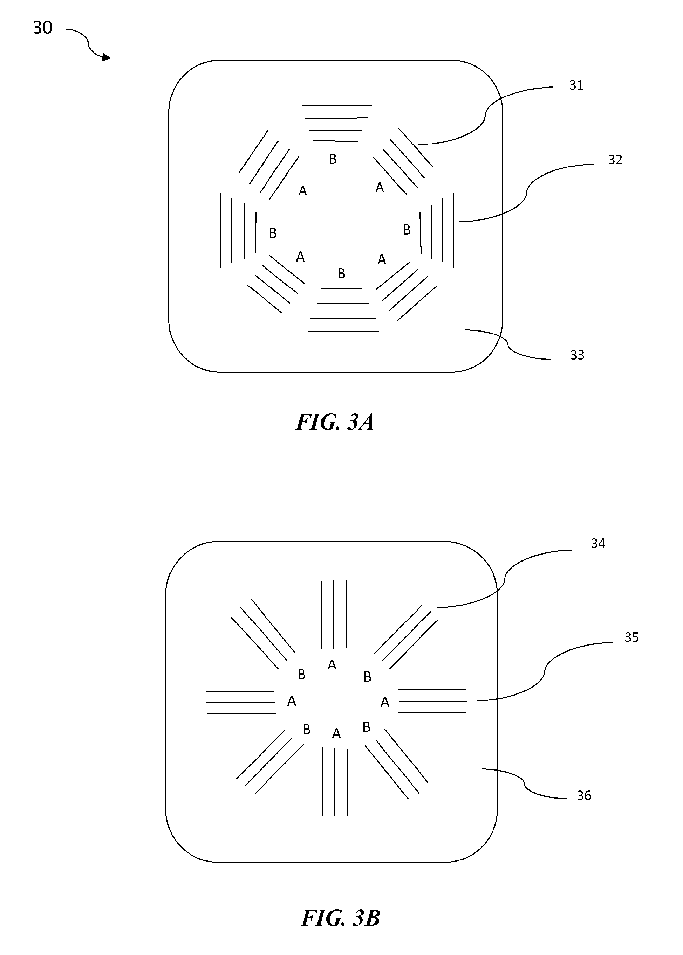

FIG. 3A illustrates a perspective view 30 of a bridge configuration of magnetoresistive sensors 31 and 32 that are intertwined with the first magnetoresistive sensor 31 offset from the second magnetoresistive sensor 32, which can be adapted for use in accordance with a preferred embodiment. The lines represent magnetoresistive runners. The magnetoresistive sensors 31 and 32 are placed on a substrate 33.

FIG. 3B illustrates an additional perspective view of an integrated circuit with bridge configuration of magnetoresistive sensors 34 and 35 that are intertwined with the first magnetoresistive sensor 34 offset from the second magnetoresistive sensor 35, which can be adapted for use in accordance with a preferred embodiment. The lines represent magnetoresistive runners. The magnetoresistive sensors 34 and 35 are placed on a substrate 36.

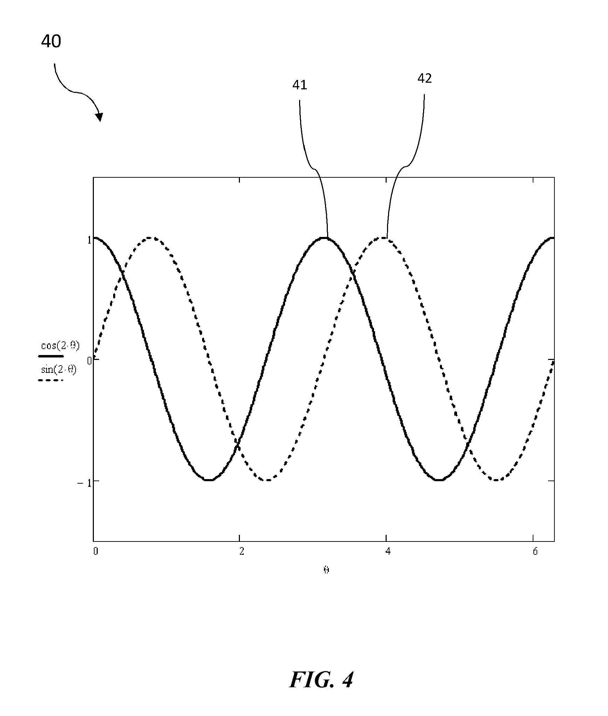

FIG. 4 illustrates graphs 40 depicting changes in magnetic flux as detected by two magnetoresistors 31 and 32 from a rotating target speed, position and direction sensing apparatus. When a rotating target 11 is spinning, magnetoresistive sensors 31 and 32 outputs two phase shifted signals 41 and 42 corresponding to each of the two magnetoresistors 31 and 32. The graphs 41 and 42 will be inversed if the rotating target 11 spins in the opposite direction. The phase shift of the signals needed to determine direction is sufficiently maintained for a variety of target feature size, spacing, and composition. This is possible because the sensor operates on the principle of the angle of the target features in relation to the bridges rather than the size, spacing or composition of the target. The bridges can be rotated with respect to one another such that the bridge signals are naturally shifted in phase.

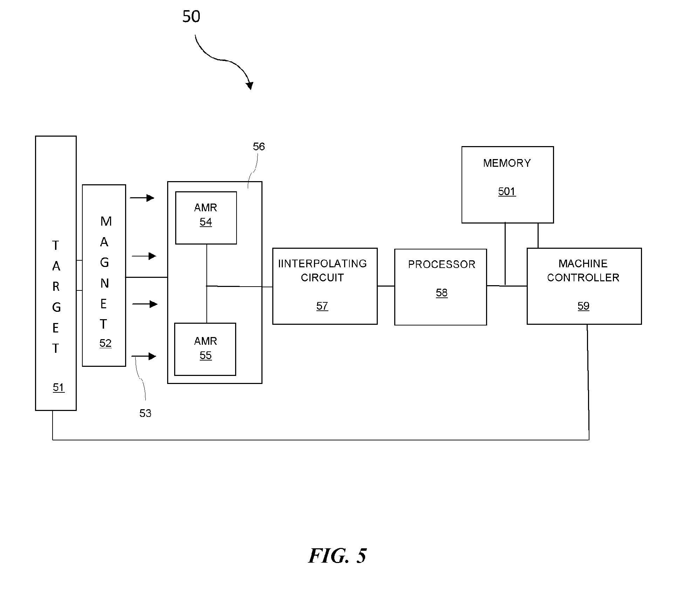

FIG. 5 illustrates a block diagram 50 of a magnetoresistive sensor system for detecting the speed and direction of rotating targets, in accordance with a preferred embodiment. At least two magnetoresistive sensors 54 and 55 occupying the same area on a substrate 56 outputs analog bridge signals from the changes in magnetic flux 53 produced by the magnet 52 as it spins with the rotating target 51. The analog bridge signals are routed to an interpolation integrated circuit 57. The interpolating integrated circuit 57 divides the signals into small angular increments. The interpolating integrated circuit 57 converts output signals into digital form indicating the angular position. The final output has an angular frequency that is many times that of the angular frequency of the bridge outputs. A processor 58 calculates these signals to determine the angular speed, position, and direction of the rotating target 11. A memory 501 is used to save the data produced by the processor 58. The apparatus and method can be used for the target as it is spinning clockwise or reversed in a counter-clockwise direction. A machine controller 59 interacts with the components described in this apparatus to manipulate the target performance, or in an emergency situation force an immediate shut-down.

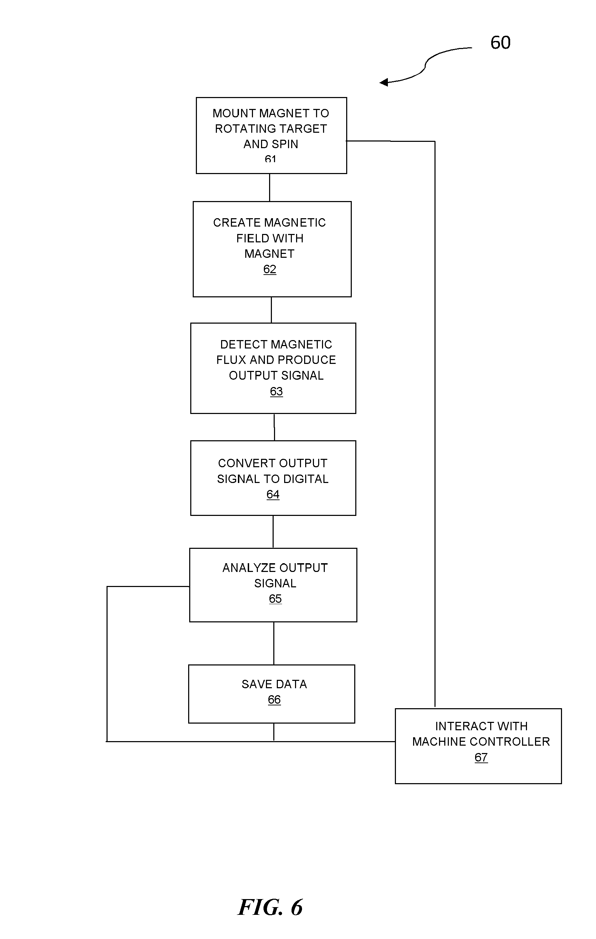

FIG. 6 illustrates a high-level diagram of a method 60 for detecting speed, position and direction of rotating targets, which can be adapted for use in accordance with a preferred embodiment. As indicated at block 61, a magnet 12 is mounted onto a rotating target 11. Once the magnet 12 is affixed to the rotating target 11, both spin on the same axis. As indicated at block 62, the spin of a rotating target 11 creates a repetitious change in the magnetic field 21 created by the magnet 12. Thereafter, as indicated at block 63, the bridge configurated intertwined magnetoresistive sensors 31 and 32, as depicted in FIG. 3A, detect the magnetic flux and produce output signals.

As indicated next at block 64, output signals representative of magnetic flux flowing through magnetoresistive sensors 31 and 32 are converted by an interpolating integrated circuit 57, as depicted in FIG. 5, to digital form as represented by signals 41 and 42 as depicted in FIG. 4. The output signals from the first magnetoresistive sensor 31 and second magnetoresistive sensor 32 are naturally shifted in phase. Thereafter, as described at block 65, the output signal can be analyzed by a processor 58, as depicted in FIG. 5. The resulting data is saved in a memory 501, as depicted in FIG. 5, as described at block 66. As indicated at block 67, the overall function of the rotating target 11 is controlled by the machine controller 59, as depicted in FIG. 5. The machine controller 59 interacts with the analyze output signal 65, save data 66, and spin rotating target 61 functions.

It can be further appreciated that the method includes connecting the first magnetoresistive sensor 31 to the second magnetoresistive sensor 32 rotated with respect to one another in a bridge configuration.

It can be further appreciated that the method includes placing the magnetoresistive sensors and the interpolated integrated circuit on the same circuit board to maximize performance functions on the same circuit.

It will be appreciated that variations of the above-disclosed and other features and functions, or alternatives thereof, may be desirably combined into many other different systems or applications. Also, that various presently unforeseen or unanticipated alternatives, modifications, variations or improvements therein may be subsequently made by those skilled in the art which are also intended to be encompassed by the following claims.

## Claims

1. A magnetic sensor apparatus (50) for sensing a magnet (52) mounted to a rotating target (51), wherein said magnet spins with said rotating target, comprising:
a substrate (56);
a first (54) and a second (55) magnetoresistive sensor placed in a bridge configuration on said substrate to detect magnetic flux in a magnetic field created by said magnet, and to output analog bridge signals having an angular frequency;
an interpolating integrated circuit (57) for analyzing said analog bridge signals and converting said analog bridge signals into digital data, and
a processor (58) for determining speed, position and direction of said rotating target from said digital data.

2. The apparatus of claim 1 wherein said interpolating integrated circuit (57) divides said output analog bridge signals into smaller angular increments to provide a higher angular frequency that is many times said angular frequency.

3. The apparatus of claim 1 wherein said first magnetoresistive sensor (54) is intertwined with said second magnetoresistive sensor (55) to produce dual phased shifted signals.

4. The apparatus of claim 3, wherein said first magnetoresistive sensor (54) and said second magnetoresistive sensor (55) are offset from one another in angle or position.

5. The apparatus of claim 3 wherein said first (54) and said second (55) magnetoresistive sensor each comprise a plurality of magnetoresistors.

6. The apparatus of claim 1 further comprising a memory (501) to save data produced by said apparatus.

7. The apparatus of claim 6 further comprising a machine controller (59) to interact with said processor, said memory, and said rotating target to control said rotating target.

8. The apparatus of claim 1 wherein said first (54) and said second magnetoresistive sensor (55) and said interpolating integrated circuit (57) are both on said substrate (56).

9. A magnetic sensing method for sensing a magnet (52) mounted on a rotating target (51), wherein said magnet and said rotating target are affixed on a same axis of rotation, comprising;
placing a first (54) and a second magnetoresistive sensor (55) in a bridge configuration on a substrate (56) along said same axis of rotation proximate to said magnet, wherein said first and said second magnetoresistive sensor produces output analog bridge signals having an angular frequency representative of a magnetic flux in a magnetic field created by said magnet flowing through said first and said second magnetoresistive sensor; and spinning said rotating target and said magnet on said same axis of rotation,
analyzing said analog bridge signals during said spinning to convert said analog bridge signals into digital data, and
determining speed, position and direction of said rotating target from said digital data.

10. The method of claim 9 further comprising dividing said output analog bridge signals into smaller angular increments to provide a higher angular frequency that is many times said angular frequency.

11. The method of claim 9 wherein said first magnetoresistive sensor (54) is intertwined with said second magnetoresistive sensor (55) to produce dual phased shifted signals.

12. The method of claim 11 further comprising saving data produced by said method in a memory (501).

13. The method of claim 12 further comprising controlling said rotating target using said data with a machine controller (59).
